# NEUE EUROPÄISCHE PATENTSCHRIFT

(11) **EP 2 427 310 B2**
(45) Veröffentlichungstag und Bekanntmachung des Hinweises auf die Entscheidung über den Einspruch: **28.11.2018**
(45) Hinweis auf die Patenterteilung: 20.03.2013
(21) Anmeldenummer: 10722971.8
(22) Anmeldetag: 28.04.2010
(51) Int. Cl.: B29B 17/04, B29K 105/06

(54) **VERFAHREN UND VORRICHTUNG ZUM AUFBEREITEN VERUNREINIGTER KUNSTSTOFFGEBINDE, INSBESONDERE ÖLBEHÄLTER**
METHOD AND APPARATUS FOR PURIFYING POLLUTED PLASTIC CONTAINERS, IN PARTICULAR OIL CONTAINERS
PROCÉDÉ ET DISPOSITIF DE TRAITEMENT DE CONTENANTS EN MATIÈRE PLASTIQUE POLLUÉS, EN PARTICULIER DE RÉCIPIENTS D'HUILE

(30) Priorität: 05.05.2009 DE 102009019706
(43) Veröffentlichungstag der Anmeldung: 14.03.2012
(73) Patentinhaber: HERBOLD MECKESHEIM GMBH, 74909 Meckesheim (DE)
(72) Erfinder: KURMANN, Clemens, 24536 Neumünster (DE)
(74) Vertreter: Patent- und Rechtsanwälte Ullrich & Naumann
(86) Internationale Anmeldenummer: PCT/EP2010/055712
(87) Internationale Veröffentlichungsnummer: WO 2010/127979

(56) Entgegenhaltungen:
- AT-B- 384 988
- DE-A1- 2 156 198
- DE-A1- 4 235 932
- DE-A1- 4 303 802
- DE-C3- 2 525 750
- US-A- 4 145 175
- RESCH M ET AL: "VERMISCHTE UND VERSCHMUTZTE ALTKUNSTSTOFFE STOFFLICH VERWERTEN" KUNSTSTOFFE, CARL HANSER VERLAG, MUNCHEN, DE, Bd. 80, Nr. 4, 1. April 1990 (1990-04-01), Seiten 493-495, XP000173800 ISSN: 0023-5563
- SCHIEFER, K. LEXIKON DER VERFAHRENSTECHNIK 1970, STUTTGART, Seite 498

## Beschreibung

Die Erfindung betrifft ein Verfahren zum Aufbereiten verunreinigter Kunststoffgebinde, insbesondere Ölbehälter, mit den Schritten,
A) die Kunststoffgebinde zu Schnittgut zu zerkleinern und
B) das Schnittgut mit einer vorzugsweise Wasser aufweisenden Reinigungsflüssigkeit zu reinigen.

Ferner betrifft die Erfindung eine Vorrichtung zum Aufbereiten verunreinigter Kunststoffgebinde, insbesondere Ölbehälter, vorzugsweise zur Durchführung eines Verfahrens nach mindestens einem der vorangegangenen Ansprüche, mit einer Zerkleinerungseinrichtung zum Zerkleinern der Kunststoffgebinde zu Schnittgut und einer Reinigungseinrichtung zur Reinigung des Schnittgutes mit einer vorzugsweise Wasser aufweisenden Reinigungsflüssigkeit.

Insbesondere für kurzlebig benutzte Kunststoffgebinde besteht heutzutage die Forderung nach einer Wiederverwertung. Hierfür stehen verschiedene bekannte Verfahren und Vorrichtungen zur Verfügung. Gerade für die Verwendung in Haushalten ist eine Wiederverwertung von Joghurtbechern und dergleichen Kunststoffverpackungen im Rahmen des Dualen Systems mittlerweile zum Alltag geworden.

Höhere Anforderungen sind dagegen jedoch beispielsweise an die Verwertung von ölbelasteten Emballagen zu stellen, also um Verpackungen, die mit hartnäckigen Rückständen von ölhaltigen Substanzen behaftet sind, wie es beispielsweise bei Öldosen, Ölkanistern oder Ölfässern aus HDPE-Kunststoff der Fall ist. Derartige Kunststoffgebinde sind bislang größtenteils der thermischen Entsorgung zugeführt worden. Jedoch sind thermische Entsorgungsverfahren sehr energieintensiv und schon deshalb nicht besonders effektiv.

Bekannte Verfahren und Vorrichtungen sind aus den Druckschriften DE-A- 4235 932 und AT 384 988 bekannt.

Aufgabe der vorliegenden Erfindung ist es, das Verfahren und die Vorrichtung der eingangs genannten Art ressourcenschonender und effektiver zu gestalten und den aufbereiteten Abfallstrom für die Herstellung neuer Produkte nutzbar zu machen.

Diese Aufgabe wird gemäß einem ersten Aspekt der vorliegenden Erfindung gelöst durch ein Verfahren gemäß Anspruch 1.

Ferner wird gemäß einem zweiten Aspekt der vorliegenden Erfindung zur Lösung der Aufgabe vorgeschlagen eine Vorrichtung gemäß Anspruch 8.

Mit Hilfe der Erfindung werden gegenüber herkömmlichen Verfahren eine geringere Umweltbelastung, ein verringerter energetischer Aufwand sowie niedrigere Kosten erzielt. Dies wird erfindungsgemäß dadurch erreicht, dass während der Reinigung benutzte Reinigungsflüssigkeit in einem Reservoir aufgefangen wird, Verunreinigungen, die insbesondere kohlenwasserstoffhaltige Substanzen wie Öle aufweisen, durch mindestens ein Abschöpfmittel aus der Reinigungsflüssigkeit im Reservoir entfernt werden und anschließend die so gereinigte Reinigungsflüssigkeit aus dem Reservoir entnommen und für die Reinigung des Schnittgutes wieder verwendet wird. Außerdem ermöglicht die Erfindung eine nahezu vollständige werkstoffliche Verwertung von belasteten Emballagen wie beispielsweise Öldosen, Ölkanister oder Ölfässern aus HDPE-Kunststoff, so dass aus dem gewonnenen Schnittgut neue, beispielsweise baunahe, Produkte hergestellt werden können.

Bevorzugt kann die Reinigung als Kaltwäsche und somit ohne Erhitzung der Reinigungsflüssigkeit durchgeführt werden. Ferner kann vorzugsweise eine Reinigungsflüssigkeit ohne jegliche Waschzusätze wie beispielsweise Tenside und insbesondere als Reinigungsflüssigkeit ausschließlich Wasser zum Einsatz kommen. Diese Maßnahmen, welche ganz besonders wirkungsvoll zu einer geringeren Umweltbelastung und einem verringerten energetischen Aufwand beitragen, lassen sich gerade mit Hilfe der vorliegenden Erfindung besonders wirksam umsetzen.

Zweckmäßigerweise wird als Abschöpfmittel ein Skimmer verwendet, um Verunreinigungen von der Reinigungsflüssigkeit im Reservoir abschöpfen zu können. Da vielfach die Verunreinigungen leichter als die Reinigungsflüssigkeit sind und deshalb an der Oberfläche der Reinigungsflüssigkeit schwimmen, was insbesondere bei Kohlenwasserhaltigen Substanzen der Fall ist, lässt sich ein Skimmer als Abschöpfmittel besonders wirkungsvoll verwenden. Im Gegenzuge ist es zweckmäßig, die Reinigungsflüssigkeit vom Boden des Reservoirs zur Wiederverwendung zu entnehmen, da der von den Verunreinigungen befreite Teil der Reinigungsflüssigkeit im Bodenabschnitt des Reservoirs zu finden ist. Hierzu kann das Entnahmemittel zweckmäßigerweise eine Saugleitung aufweisen, deren Einlass benachbart zum Boden des Reservoirs bzw. kurz oberhalb des Bodens angeordnet ist. Für eine effektive Entnahme der gereinigten Reinigungsflüssigkeit aus dem Reservoir sollten außerdem das Entnahmemittel eine Saugpumpe aufweisen.

Ein Schwerpunkt der Erfindung liegt in der mehrstufigen Wäsche, wobei das Schnittgut insbesondere zunächst in einer Nassmühle sowohl gemahlen als auch mit Reinigungsflüssigkeit gereinigt und anschließend in einem Friktionswäscher mit der Reinigungsflüssigkeit nochmals gereinigt wird. Bei dieser Ausführung wird die benutzte Reinigungsflüssigkeit sowohl von der Nassmühle als auch vom Friktionswäscher in das Reservoir geleitet und nach Entfernen der Verunreinigungen die so gereinigte Reinigungsflüssigkeit sowohl der Nassmühle als auch dem Friktionswäscher wieder zugeführt. In der Nassmühle findet also neben einem weiteren Zerkleinerungsvorgang, bei welchem das Schnittgut gemahlen wird, gleichzeitig auch noch ein Reinigungsvorgang statt. Somit wird in der Nassmühle das Schnittgut zu Mahlgut zerkleinert. Allerdings sei in diesem Zusammenhang angemerkt, dass hinsichtlich ihrer grundsätzlichen Bedeutung zwischen Schnittgut' und "Mahlgut" keine Unterschiede zu definieren sind. Zweckmäßigerweise werden die Verunreinigungen, welche von der Reinigungsflüssigkeit im Reservoir abgeschöpft worden sind, zur Entsorgung in einem Sammelbehälter gesammelt.

Bevorzugt kann zwischen dem Schritt A und dem Schritt B ein Schritt A1, Verunreinigungen in Form von flüssigen Anhaftungen, die insbesondere kohlenwasserstoffhaltige Substanzen wie beispielsweise Öle aufweisen, mit Hilfe von Fliehkraft aus dem Schnittgut auszusondern, durchgeführt werden. Dadurch lassen sich auf besonders wirkungsvolle Weise flüssige Anhaftungen vom Schnittgut und somit von den Schnipseln zu entfernen. Bevorzugt wird hierzu eine Zentrifuge verwendet, in der das Schnittgut mitsamt den Verunreinigungen erhöhten Fliehkräften ausgesetzt wird.

Ebenfalls kann vorzugsweise zwischen dem Schritt A und dem Schritt B ein weiterer Schritt A2, Schwergut auszusondern, stattfinden. Hierzu kann als zwischen der Zerkleinerungseinrichtung und der Reinigungsvorrichtung vorgesehene Schwergutaussonderungseinrichtung insbesondere eine Förderschnecke mit einer Schwergutfalle verwendet werden. Vorzugsweise kann in der Förderschnecke das Schnittgut mit Flüssigkeit eingeweicht werden, wodurch sich die Verunreinigungen im nachfolgenden Reinigungsschritt besonders leicht abwaschen lassen.

Außerdem kann der Schritt A1 vor dem Schritt A2 durchgeführt und somit die Schwergutaussonderungseinrichtung der Aussonderungseinrichtung zur Aussonderung von flüssigen Anhaftungen nachgeschaltet sein.

Schließlich sollte in einem den Schritt B nachgeschalteten Schritt C das Schnittgut bzw. Mahlgut in einer hierfür vorgesehenen Trocknungseinrichtung getrocknet werden. Zweckmäßigerweise kann das während der Trocknung abgeschiedene Wasser, welches ja sauber ist, ebenfalls im Reservoir aufgefangen werden.

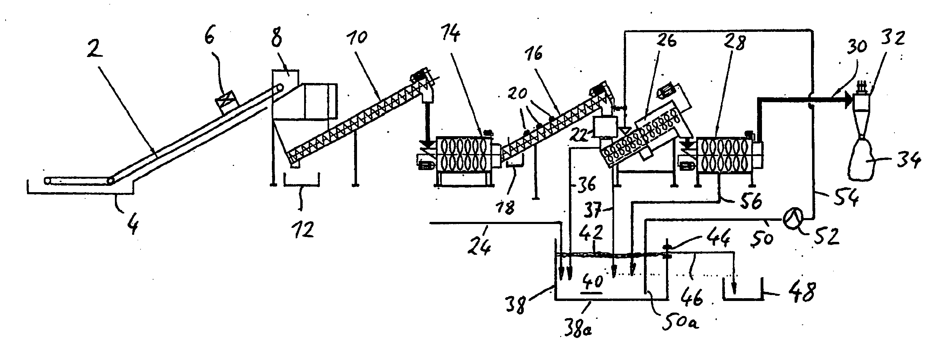

Nachfolgend wird ein bevorzugtes Ausführungsbeispiel anhand der beigefügten einzigen Figur näher erläutert, in der einem Blockschaltbild ähnlich der Aufbau einer Anlage zur Verwertung von Kunststoffgebinden gemäß einer bevorzugten Ausführung der Erfindung schematisch dargestellt ist.

Die in der einzigen Figur schematisch dargestellte Anlage ist zur Verwertung von benutzten verunreinigten Kunststoffgebinden und insbesondere von ölbelasteten Emballagen wie beispielsweise Öldosen oder Ölkanistern aus HDPE-Kunststoff vorgesehen.

Nach optischer Sichtung der restentleerten Kunststoffgebinde werden diese im dargestellten Ausführungsbeispiel auf ein Förderband 2 aufgegeben, welche als Aufgabestation dient und den Anfang der dargestellten Anlage bildet. Unterhalb des Förderbandes 2 erstreckt sich eine Auffangwanne 4, in der insbesondere Ölreste aufgefangen werden, die sich bereits in diesem Stadium der Aufbereitung von den Kunststoffgebinden lösen und aus dem Förderband 2 nach unten tropfen. Während sich die (in der Figur nicht dargestellten) Kunststoffgebinde entlang des Förderbandes 2 bewegen, werden sie an einem Metalldetektor 6 vorbeigeführt. Dieser Metalldetektor 6 sorgt dafür, metallische Bestandteile als Störstoffe zu erkennen und ein entsprechendes Aufmerksamkeitssignal zu geben, damit die gesamte Anlage von einer Bedienperson gestoppt wird, um dann die erkannten metallischen Störstoffe zu entfernen. Alternativ ist es aber auch denkbar, eine in der Figur nicht dargestellte Aussonderungseinrichtung vorzusehen, die vom Metalldetektor 6 entsprechend angesteuert wird, um die erkannten metallischen Störstoffe vom Förderband 2 und somit aus dem Massestrom zu entfernen.

Das Förderband 2 fördert die Kunststoffgebinde in einen Schredder 8, in dem die Kunststoffgebinde mechanisch zu Schnittgut bzw. Schnipseln zerkleinert werden, welche gewöhnlich eine Korngröße von nicht mehr als 40 mm aufweisen. Gewöhnlich wird der Vorgang im Schredder 8 auch als Vorzerkleinerung bezeichnet.

Vom Schredder 8 wird das Schnittgut über eine geneigt ansteigende Förderschnecke 10 weitertransportiert, unter deren unten liegendem Einlassbereich sich eine Wanne 12 befindet, um weitere Reste von Öl oder sonstigen flüssigen kohlenwasserstoffhaltigen Substanzen aufzufangen, die sich während des Transportes durch die Förderschnecke 10 vom Schnittgut absondern.

Der Förderschnecke 10 nachgeschaltet ist eine Zentrifuge 14, in der das Schnittgut einer erhöhten Fliehkraft ausgesetzt wird, um weitere anhaftende Reste von Öl oder sonstigen flüssigen kohlenwasserstoffhaltigen Substanzen vom Schnittgut zu entfernen. Diese Trennung, bei welcher es sich um eine mechanische Vorreinigung handelt, macht sich durch die Bildung von 'Nebel' bemerkbar, welcher beispielsweise durch eine nicht dargestellte Absaugeinrichtung oder einen ebenfalls nicht dargestellten Zyklon abgesaugt wird..

Stromabwärts von der Zentrifuge 14 schließt sich eine weitere ansteigend angeordnete Förderschnecke 16 an, die eine Schwergutfalle 18 aufweist und zur Aussonderung von Schwergut aus dem entlang der Förderschnecke 16 bewegten Schnittgut vorgesehen ist, was insbesondere dem Schutz einer nachgeschalteten Nassmühle 22 dient, welche nachfolgend näher beschrieben wird. Wie in der Figur ferner erkennbar angedeutet ist, sind entlang der Förderschnecke 16 Sprühmittel 20 vorgesehen, aus denen Flüssigkeit, vorzugsweise Wasser, in die Förderschnecke 16 gegeben wird, um das darin geförderte Schnittgut in dieser Flüssigkeit einzuweichen.

Ein Herzstück der Anlage bildet die anschließende Reinigung, bei welcher das Schnittgut mit einer Reinigungsflüssigkeit gewaschen wird. Hierzu wird im dargestellten Ausführungsbeispiel eine Nassmühle 22 verwendet, die mit Reinigungsflüssigkeit gespeist wird, welche von einer nicht dargestellten Quelle über eine Zuführleitung 24 in die Anlage gelangt und dort auf nachfolgend noch näher beschriebene Weise verarbeitet wird. Neben dem beschriebenen Waschvorgang findet in der Nassmühle 22 auch noch eine weitere Zerkleinerung statt. Denn in der Nassmühle 22 wird das Schnittgut zu Mahlgut mit einer Korngröße von weniger als 8 mm zerkleinert. Somit findet im Schredder 8 eine mechanische Vorzerkleinerung statt, während in der Nassmühle 22 der Hauptzerkleinerungsschritt stattfindet. Alternativ ist es aber auch denkbar, die Zerkleinerung im wesentlichen dem Schredder 8 zu überlassen. Stromabwärts von der Nassmühle 22 ist im dargestellten Ausführungsbeispiel ein Friktionswäscher 26 vorgesehen, der ebenfalls über die Zuführleitung 24 mit der erwähnten Reinigungsflüssigkeit gespeist wird. Somit bildet im dargestellten Ausführungsbeispiel die Nassmühle 22 eine erste Reinigungsstufe und der Friktionswäscher 26 eine zweite Reinigungsstufe einer Waschstation.

Als Drittreinigungsstufe der zuvor erwähnten Waschstation kann zusätzlich noch ein in der Figur nicht dargestelltes Schwimmsinkbecken vorgesehen sein, welches dem Friktionswäscher nachgeschaltet und über die bereits erwähnte Zuführleitung 24 ebenfalls mit der Reinigungsflüssigkeit versorgt wird. Ein solches Schwimmsinkbecken dient insbesondere dazu, eventuell noch verbliebene Kleinstteile von Schwergut sowie beispielsweise auch PET-Schnipsel auszusondern.

Nach Beendigung der Reinigung wird das so gewaschene bzw. gereinigte Schnittgut durch einen Trockner 28 geführt. Demnach findet im dargestellten Ausführungsbeispiel die Trocknung im Trockner 28 auf mechanische Weise statt. Alternativ oder zusätzlich ist beispielsweise aber auch die Verwendung eines thermisch arbeitenden Trockners denkbar.

Nach Verlassen des Trockners 28 wird das Schnittgut bzw. Mahlgut über eine Förderleitung 30 durch einen Zyklon 32 transportiert, welcher die so fertig verarbeiteten und getrockneten Schnipsel in einen Sack 34 abfüllt, welcher als sog. "Big-Bag" bezeichnet wird.

Wie bereits erwähnt, ist ein Herzstück des Verfahrens und der Vorrichtung die Waschstation, wobei hier wiederum ein besonderer Schwerpunkt in der Aufbereitung der Reinigungsflüssigkeit liegt.

Wie die Figur erkennen lässt, wird frische Reinigungsflüssigkeit bei Bedarf aus einer nicht dargestellten Quelle über die Zuführleitung 24 in ein Reservoir 38 gefüllt, um sie in den Verarbeitungsprozess der beschriebenen Anlage zu geben. Außerdem wird die benutzte Reinigungsflüssigkeit aus der Nassmühle 22 über eine Abflussleitung 36 und aus dem Friktionswäscher 26 über eine Abflussleitung 37 in das Reservoir 38 abgeleitet, in welchem die benutzte Reinigungsflüssigkeit temporär aufgefangen wird, wie durch das Bezugszeichen "40" angedeutet ist. Insbesondere wenn die von der Reinigungsflüssigkeit 40 aufgenommenen Verunreinigungen kohlenwasserstoffhaltige Substanzen enthalten und ein geringeres spezifisches Gewicht als die Reinigungsflüssigkeit 40 aufweisen, sind die Verunreinigungen eher im Bereich der Oberfläche der Reinigungsflüssigkeit 40 zu finden, was in der Figur durch das Bezugszeichen"42" angedeutet ist.

Entfernt werden die Verunreinigungen im dargestellten Ausführungsbeispiel über einen Skimmer 44, der in einer Seitenwand des Reservoirs 38 auf Höhe der Oberfläche der im Reservoir 38 gesammelten benutzten Reinigungsflüssigkeit 40 und somit auf Höhe der zu erwartenden Verunreinigungen 42 ausgebildet ist. Über den Skimmer 44 werden die Verunreinigungen 42 aus dem Reservoir 38 herausgezogen und über eine an den Skimmer 44 angeschlossene Abflussleitung 46 in einen Sammelbehälter 48 verbracht. Ist der Sammelbehälter 48 voll, wird er gegen einen neuen leeren Sammelbehälter ausgetauscht und zu einer (in der Figur nicht dargestellten) entfernt gelegenen Station abtransportiert, wo er dann entleert wird und die Verunreinigungen entsorgt werden. Um die Verunreinigungen durch die Abflussleitung 46 zum Sammelbehälter 48 zu befördern, können entsprechende Fördermittel wie beispielsweise Pumpen vorgesehen sein, was jedoch in der Figur nicht dargestellt ist.

Zur Entnahme der von den Verunreinigungen im wesentlichen befreiten Reinigungsflüssigkeit ist im dargestellten Ausführungsbeispiel eine Absaugleitung 50 vorgesehen. Da im beschriebenen Ausführungsbeispiel die Trennung der Verunreinigungen 42 von der Reinigungsflüssigkeit 40 im wesentlichen zunächst aufgrund des unterschiedlichen spezifischen Gewichtes bewirkt wird und die Reinigungsflüssigkeit 40 schwerer als die Verunreinigungen 42 ist, werden die besten Ergebnisse erzielt, wenn die Reinigungsflüssigkeit 40 aus dem Bereich des Bodens 38a des Reservoirs 38 abgesaugt wird, wozu im dargestellten Ausführungsbeispiel die Absaugleitung 50 mit ihrem Einlass 50a im Reservoir 38 dicht oberhalb dessen Bodens 38a angeordnet ist. Wie die Figur ferner erkennen lässt, führt die Absaugleitung 50 zu einer Absaugpumpe 52, welche die aus dem Reservoir 38 abgesaugte, gereinigte Reinigungsflüssigkeit über eine Leitung 54 sowohl in die Nassmühle 22 als auch in den Friktionswäscher 26 einspeist. Somit wird die Reinigungsflüssigkeit im wesentlichen im Kreislauf geführt und lässt sich zumindest zu einem großen Teil wieder verwenden.

Ferner wird im dargestellten Ausführungsbeispiel das im Trockner 28 abgeschiedene Wasser ebenfalls in das Reservoir 38 entsorgt. Dies bietet sich schon deshalb an, da das vom Trockner 28 abgeschiedene Wasser sauber ist. Hierzu ist im dargestellten Ausführungsbeispiel eine Ablaufleitung 56 vorgesehen, die vom Trockner 28 in das Reservoir 38 führt. Um ein Überlaufen des Reservoirs 38 zu vermeiden, kann beispielsweise zusätzlich noch in der Ablaufleitung 56 ein (in der Figur nicht dargestellter) Abzweig mit einem Umschaltventil vorgesehen sein, wodurch die Ableitung des aus dem Trockner 28 abgeschiedenen Wassers wahlweise in das Reservoir 38 oder anderweitig entsorgt werden kann. In diesem Zusammenhang wäre es ferner denkbar, stromaufwärts vor einem solchen Abzweig noch ein als Zwischenspeicher dienendes weiteres (in der Figur ebenfalls nicht dargestellten) Reservoir vorzusehen, welches die Ablaufleitung 56 unterbricht und auf gleicher Höhe wie das Reservoir 38 anzuordnen ist. Schließlich kann der Trockner 28 aber auch mit einem (in der Figur ebenfalls nicht dargestellten) Wasserablauf versehen sein, durch den das während der Trocknung abgeschiedene Wasser anderweitig entsorgt werden kann.

Abschließend sei noch darauf hingewiesen, dass bevorzugt an verschiedenen Entnahmestellen der beschriebenen Anlage und somit des Prozesses regelmäßige Kontrollen stattfinden sollten, um die erforderliche Qualität für die Weiterverarbeitung des Schnittgutes zu sichern. Hierzu bedarf es der Verwendung entsprechender (in der Figur nicht gezeigter) Sensoren an geeigneten Stellen, welche an eine (in der Figur ebenfalls nicht dargestellte) Überwachungseinrichtung angeschlossen sind.

Mit der zuvor beschriebenen Anlage lässt sich hochqualitatives Mahlgut mit einer Korngröße von kleiner als 8 mm und einer Restfeuchte von weniger als 0,2 % produzieren, welche in sog. Big-Bags bereitgestellt werden können.

## Patentansprüche

1. Verfahren zum Aufbereiten verunreinigter Kunststoffgebinde, insbesondere Ölbehälter, mit den Schritten,
A) die Kunststoffgebinde zu Schnittgut zu zerkleinern und
B) das Schnittgut mit einer vorzugsweise Wasser aufweisenden Reinigungsflüssigkeit zu reinigen,
sowie ferner mit einem während des Schrittes B oder im Anschluss an den Schritt B stattfindenden Schritt B1, benutzte Reinigungsflüssigkeit (40) in einem Reservoir (38) aufzufangen, Verunreinigungen (42), die insbesondere kohlenwasserstoffhaltige Substanzen wie beispielsweise Öle aufweisen, durch mindestens ein Abschöpfmittel (44) aus der Reinigungsflüssigkeit (40) im Reservoir (38) zu entfernen und anschließend die so gereinigte Reinigungsflüssigkeit (40) aus dem Reservoir (38) zu entnehmen und für die Reinigung des Schnittgutes wieder zu verwenden,
**dadurch gekennzeichnet, dass** die Reinigungsflüssigkeit frei von Waschzusätzen wie beispielsweise Tensiden ist.

2. Verfahren nach Anspruch 1,
**dadurch gekennzeichnet, dass** die Reinigungsflüssigkeit im wesentlichen ausschließlich aus Wasser besteht.

3. Verfahren nach mindestens einem der vorangegangenen Ansprüche, bei welchem während des Schrittes B das Schnittgut zunächst in einer Nassmühle (22) sowohl weiter zerkleinert als auch mit der Reinigungsflüssigkeit gereinigt und anschließend in einem Friktionswäscher (26) mit der Reinigungsflüssigkeit nochmals gereinigt wird,
**dadurch gekennzeichnet, dass** während des Schrittes B1 die benutzte Reinigungsflüssigkeit (40) sowohl von der Nassmühle (22) als auch vom Friktionswäscher (26) in das Reservoir (38) geleitet und nach Entfernen der Verunreinigungen die so gereinigte Reinigungsflüssigkeit (40) sowohl der Nassmühle (22) als auch dem Friktionswäscher (26) wieder zugeführt wird.

4. Verfahren nach Anspruch 3,
**dadurch gekennzeichnet, dass** während des Schrittes B das Schnittgut nach dem Friktionswäscher (26) noch zusätzlich in einem Schwimmsinkbecken mit der Reinigungsflüssigkeit gereinigt wird.

5. Verfahren nach mindestens einem der vorangegangenen Ansprüche,
**dadurch gekennzeichnet, dass** während des Schrittes B1 die Verunreinigungen in einem Sammelbehälter (48) gesammelt werden.

6. Verfahren nach mindestens einem der vorangegangenen Ansprüche,
**gekennzeichnet durch** einen zwischen dem Schritt A und dem Schritt B stattfindenden Schritt A1, Verunreinigungen in Form von flüssigen Anhaftungen, die insbesondere kohlenwasserstoffhaltige Substanzen wie beispielsweise Öle aufweisen, mit Hilfe von Fliehkraft aus dem Schnittgut auszusondern.

7. Verfahren nach Anspruch 6,
**dadurch gekennzeichnet, dass** während des Schrittes A1 flüssige Anhaftungen in einer Zentrifuge (14) aus dem Schnittgut ausgesondert werden.

8. Vorrichtung zum Aufbereiten verunreinigter Kunststoffgebinde, insbesondere Ölbehälter, vorzugsweise zur Durchführung eines Verfahrens nach mindestens einem der vorangegangenen Ansprüche, mit
einer Zerkleinerungseinrichtung (8) zum Zerkleinern der Kunststoffgebinde zu Schnittgut und
einer Reinigungseinrichtung zur Reinigung des Schnittgutes mit einer vorzugsweise Wasser aufweisenden Reinigungsflüssigkeit,
wobei die Reinigungseinrichtung ein Reservoir (38) zum Auffangen benutzter Reinigungsflüssigkeit (40), mindestens ein Abschöpfmittel (44) zur Beseitigung von Verunreinigungen (42), die insbesondere kohlenwasserstoffhaltige Substanzen wie beispielsweise Öle aufweisen, aus der Reinigungsflüssigkeit (40) und ein Entnahmemittel (50) zur Entnahme der gereinigten Reinigungsflüssigkeit (40) aus dem Reservoir (38) für eine Wiederverwendung aufweist,
**dadurch gekennzeichnet, dass**
die Reinigungseinrichtung eine Nassmühle (22) und einen nachgeschalteten Friktionswäscher (26) aufweist,
das Reservoir (38) sowohl an die Nassmühle (22) als auch an den Friktionswäscher (26) angeschlossen ist,
das Entnahmemittel (50) ausgebildet ist, die gereinigte Reinigungsflüssigkeit (40) vom Reservoir (38) sowohl zur Nassmühle (22) als auch zum Friktionswäscher (26) zurückzuleiten, und
die Reinigungseinrichtung ausgebildet ist, Reinigungsflüssigkeit im Wesentlichen frei von Waschzusätzen wie beispielsweise Tensiden zur Verfügung zu stellen.

9. Vorrichtung nach Anspruch 8,
**gekennzeichnet durch** ein dem Friktionswäscher (26) nachgeschaltetes Schwimmsinkbecken zur weiteren Reinigung des Schnittgutes mit der Reinigungsflüssigkeit.

10. Vorrichtung nach Anspruch 8 oder 9,
**gekennzeichnet durch** eine zwischen der Zerkleinerungseinrichtung (8) und der Reinigungseinrichtung vorgesehene Aussonderungseinrichtung (14) zur Aussonderung von Verunreinigungen in Form von flüssigen Anhaftungen, die insbesondere kohlenwasserhaltige Substanzen wie beispielsweise Öle aufweisen, mittels Fliehkraft aus dem Schnittgut.

11. Vorrichtung nach Anspruch 10,
**dadurch gekennzeichnet, dass** die Aussonderungseinrichtung eine Zentrifuge (14) aufweist.

12. Vorrichtung nach mindestens einem der Ansprüche 8 bis 11,
**gekennzeichnet durch** eine zwischen der Zerkleinerungseinrichtung (8) und der Reinigungseinrichtung vorgesehene Schwergutaussonderungseinrichtung (18, 20) zur Aussonderung von Schwergut aus dem Schnittgut.

13. Vorrichtung nach Anspruch 12,
**dadurch gekennzeichnet, dass** die Schwergutaussonderungseinrichtung zur Aussonderung von Schwergut eine Förderschnecke (16) mit einer Schwergutfalle (18) aufweist.

14. Vorrichtung nach Anspruch 13,
**dadurch gekennzeichnet, dass** die Förderschnecke (16) Mittel (20) zur Zuführung von Flüssigkeit aufweist, um das Schnittgut einzuweichen.

15. Vorrichtung nach Anspruch 10 oder 11 sowie nach mindestens einem der Ansprüche 12 bis 14,
**dadurch gekennzeichnet, dass** die Schwergutaussonderungseinrichtung (16, 18) der Aussonderungseinrichtung (14) zur Aussonderung von flüssigen Anhaftungen nachgeschaltet ist.

## Claims

1. Method for preparing contaminated plastics containers, in particular oil containers, comprising the steps,
A) reducing the plastics containers in size to form cut-up product and
B) cleaning the cut-up product with a cleaning fluid which preferably contains water,
and further having a step B1 taking place during step B or after step B for collecting used cleaning fluid (40) in a reservoir (38), removing impurities (42), which in particular comprise hydrocarbon-containing substances, such as, for example, oils, from the cleaning fluid (40) in the reservoir (38) by means of at least one skimming means (44) and then taking the cleaning fluid (40) cleaned in this manner from the reservoir (38) and using it again for cleaning the cut-up product,
**characterised in that** the cleaning fluid is free from washing additives, such as, for example, surfactants.

2. Method according to claim 1, **characterised in that** the cleaning fluid substantially comprises only water.

3. Method according to at least one of the preceding claims, in which during step B the cut-up product is firstly both reduced further in size in a wet mill (22) and cleaned with the cleaning fluid and afterwards is cleaned again in a friction washer (26) with the cleaning fluid, **characterised in that** during step B1 the used cleaning fluid (40) is directed both from the wet mill (22) and from the friction washer (26) into the reservoir (38) and after the removal of impurities the thus cleaned cleaning fluid (40) is returned both to the wet mill (22) and also to the friction washer (26) .

4. Method according to claim 3, **characterised in that** during step B the cut-up product after the friction washer (26) is cleaned additionally in a sink/float tank by the cleaning fluid.

5. Method according to at least one of the preceding claims, **characterised in that** during step B1 the impurities are collected in a collecting container (48).

6. Method according to at least one of the preceding claims, **characterised by** a step A1 which takes place between step A and step B, for separating impurities in the form of liquid adhesions, which comprise in particular hydrocarbon-containing substances, such as, for example, oils, by means of centrifugal force from the cut-up product.

7. Method according to claim 6, **characterised in that** during step A1 liquid adhesions are separated in a centrifuge (14) from the cut-up product.

8. Device for preparing contaminated plastics containers, in particular oil containers, preferably for performing a method according to at least one of the preceding claims, comprising a size-reducing device (8) for reducing the size of the plastics containers to form a cut-up product and
a cleaning device for cleaning the cut-up product with a cleaning fluid preferably comprising water,
wherein the cleaning device comprises a reservoir (38) for collecting used cleaning fluid (40), at least one skimming means (44) for removing impurities (42), which comprise in particular hydrocarbon-containing substances, such as, for example, oils, from the cleaning fluid (40) and a removal means (50) for removing the cleaned cleaning fluid (40) from the reservoir (38) for reuse,
**characterised in that**
the cleaning device comprises a wet mill (22) and a friction washer (26) arranged downstream,
the reservoir (38) is connected both to the wet mill (22) and to the friction washer (26),
the removal means (50) is configured for guiding the cleaned cleaning fluid (40) from the reservoir (38) both to the wet mill (22) and also to the friction washer (26) and
the cleaning device is configured to provide cleaning fluid substantially free from washing additives, such as, for example, surfactants.

9. Device according to claim 8, **characterised by** a sink/float tank connected downstream of the friction washer (26) for the further cleaning of the cut-up product with the cleaning fluid.

10. Device according to claim 8 or 9, **characterised by** a separating device (14) provided between the size-reducing device (8) and the cleaning device for separating impurities in the form of liquid adhesions, which in particular comprise hydrocarbon-containing substances, such as, for example, oils, by means of centrifugal force from the cut-up product.

11. Device according to claim 10, **characterised in that** the separating device comprises a centrifuge (14).

12. Device according to at least one of claims 8 to 11, **characterised by** a heavy product separating device (18, 20) provided between the size-reducing device (8) and the cleaning device for separating heavy product from the cut-up product.

13. Device according to claim 12, **characterised in that** the heavy product separating device for separating heavy product comprises a screw conveyor (16) with a heavy product trap (18) .

14. Device according to claim 13, **characterised in that** the screw conveyor (16) comprises means (20) for supplying liquid to steep the cut-up product.

15. Device according to claim 10 or 11 and according to at least one of claims 12 to 14, **characterised in that** the heavy product separating device (16, 18) is connected downstream of the separating device (14) for separating liquid adhesions.

## Revendications

1. Procédé de traitement de récipients en matière plastique contaminés, plus particulièrement de récipients d'huile, avec les étapes suivantes
A) broyage des récipients en matière plastique en morceaux et
B) nettoyage des morceaux avec un liquide de nettoyage comprenant de préférence de l'eau,
ainsi, en outre, que la collecte, avec un liquide de nettoyage (40) utilisé pendant l'étape B ou lors de l'étape B1 qui a lieu à la suite de l'étape B, dans un réservoir (38), des impuretés (42) qui contiennent plus particulièrement des substances contenant des hydrocarbures comme des huiles, leur élimination, par au moins un moyen d'écumage (44), hors du liquide de nettoyage (40) dans le réservoir (38) puis l'élimination du liquide de nettoyage (40) ainsi décrassé hors du réservoir (38) et réutilisation du liquide pour le nettoyage des morceaux,
**caractérisé en ce que** le liquide de nettoyage est exempt d'additifs de lavage comme des tensio-actifs.

2. Procédé selon la revendication 1,
**caractérisé en ce que** le liquide de nettoyage est constitué globalement exclusivement d'eau.

3. Procédé selon au moins une des revendications précédentes, dans lequel, pendant l'étape B, les morceaux sont d'abord broyés de manière supplémentaire dans un broyeur humide (22) et nettoyés avec le liquide de nettoyage puis encore une fois nettoyés dans un laveur à friction (26) avec le liquide de nettoyage,
**caractérisé en ce que**, pendant l'étape B1, le liquide de nettoyage (40) utilisé est conduit du broyeur humide (22) et du laveur à friction (26) vers le réservoir (38) et, après l'élimination des impuretés, le liquide de nettoyage (40) ainsi décrassé est renvoyé dans le broyeur humide (22) et le laveur à friction (26).

4. Procédé selon la revendication 3,
**caractérisé en ce que**, pendant l'étape B, les morceaux sont nettoyés encore une fois après le laveur à friction (26) dans un bac d'immersion avec le liquide de nettoyage.

5. Procédé selon au moins une des revendications précédentes,
**caractérisé en ce que**, pendant l'étape B1, les impuretés sont collectées dans un récipient de collecte (48).

6. Procédé selon au moins une des revendications précédentes,
**caractérisé par** une étape A1 exécutée entre l'étape A et l'étape B, qui consiste à extraire des morceaux les impuretés se présentant sous la forme de dépôts adhérents fluides, qui contiennent plus particulièrement des substances contenant des hydrocarbures comme des huiles, à l'aide d'une force centrifuge.

7. Procédé selon la revendication 6,
**caractérisé en ce que**, pendant l'étape A1, les dépôts adhérents fluides sont extraits des morceaux dans une centrifugeuse (14).

8. Dispositif pour le traitement de récipients en matière plastique contaminés, plus particulièrement de récipients d'huile, de préférence pour l'exécution d'un procédé selon au moins l'une des revendications précédentes, avec
un dispositif de broyage (8) pour le broyage du récipient en matière plastique en morceaux et
un dispositif de nettoyage pour le nettoyage des morceaux avec un liquide de nettoyage comprenant de préférence de l'eau,
le dispositif de nettoyage comprenant un réservoir (38) pour la collecte du liquide de nettoyage (40) utilisé, au moins un moyen d'écumage (44) pour l'élimination des impuretés (42), qui comprennent plus particulièrement des substances contenant des hydrocarbures comme des huiles, hors du liquide de nettoyage (40) et un moyen de prélèvement (50) pour le prélèvement du liquide de nettoyage (40) décrassé dans le réservoir (38) pour une réutilisation,
**caractérisé en ce que**
le dispositif de nettoyage comprend un broyeur humide (22) et un laveur à friction (26) branché en aval,
le réservoir (38) est raccordé aussi bien au broyeur humide (22) qu'au laveur à friction (26),
le moyen de prélèvement (50) est conçu pour faire renvoyer le liquide de nettoyage (40) décrassé du réservoir (38) vers le broyeur humide (22) ainsi que vers le laveur à friction (26) et
le dispositif de nettoyage est conçu pour mettre à disposition un liquide de nettoyage globalement exempt d'additifs de lavage comme des tensio-actifs.

9. Dispositif selon la revendication 8,
**caractérisé par** un bac d'immersion disposé en aval du laveur à friction (26) pour le nettoyage supplémentaire des morceaux avec le liquide de nettoyage.

10. Dispositif selon la revendication 8 ou 9,
**caractérisé par** un dispositif d'extraction (14) disposé entre le dispositif de broyage (8) et le dispositif de nettoyage, pour l'extraction hors des morceaux, des impuretés se présentant sous la forme de dépôts adhérents fluides, qui comprennent plus particulièrement des substances contenant des hydrocarbures comme des huiles, au moyen d'une force centrifuge.

11. Dispositif selon la revendication 10,
**caractérisé en ce que** le dispositif d'extraction comprend une centrifugeuse (14).

12. Dispositif selon au moins l'une des revendications 8 à 11,
**caractérisé par** un dispositif d'extraction de fractions lourdes (18, 20) disposé entre le dispositif de broyage (8) et le dispositif de nettoyage pour l'extraction des fractions lourdes hors des morceaux.

13. Dispositif selon la revendication 12,
**caractérisé en ce que** le dispositif d'extraction de fractions lourdes pour l'extraction des fractions lourdes comprend une vis sans fin (16) avec un piège à fractions lourdes (18).

14. Dispositif selon la revendication 13,
**caractérisé en ce que** la vis sans fin (16) comprend des moyens (20) pour l'introduction de liquide afin de ramollir les morceaux.

15. Dispositif selon la revendication 10 ou 11 ainsi que selon au moins l'une des revendications 12 à 14
**caractérisé en ce que** le dispositif d'extraction de fractions lourdes (16, 18) est disposé en aval du dispositif d'extraction (14) pour l'extraction des dépôts adhérents fluides.
